# FASCICULE DE BREVET EUROPEEN

(11) **EP 0 455 680 B1**
(45) Date de publication et mention de la délivrance du brevet: **06.10.1993**
(21) Numéro de dépôt: 90902283.2
(22) Date de dépôt: 23.01.1990
(51) Int. Cl.: G09B 17/02, G09B 15/02

(54) **APPAREIL PEDAGOGIQUE POUR LE PERFECTIONNEMENT DE LA LECTURE**
LEHRGERÄT ZUM BESSEREN LESEN
TEACHING AID FOR IMPROVING READING SKILLS

(30) Priorité: 24.01.1989 FR 8901313
(43) Date de publication de la demande: 13.11.1991
(73) Titulaire: GIAUME, Jean-Marie, F-06000 Nice (FR); DELRIEU, Richard, F-06100 Nice (FR)
(72) Inventeur: GIAUME, Jean-Marie, F-06000 Nice (FR); DELRIEU, Richard, F-06100 Nice (FR)
(86) Numéro de dépôt international: FR9000051
(87) Numéro de publication internationale: WO9009015

(56) Documents cités:
- FR-A- 2 494 873
- US-A- 3 945 292
- US-A- 3 991 648
- US-A- 3 996 833

## Description

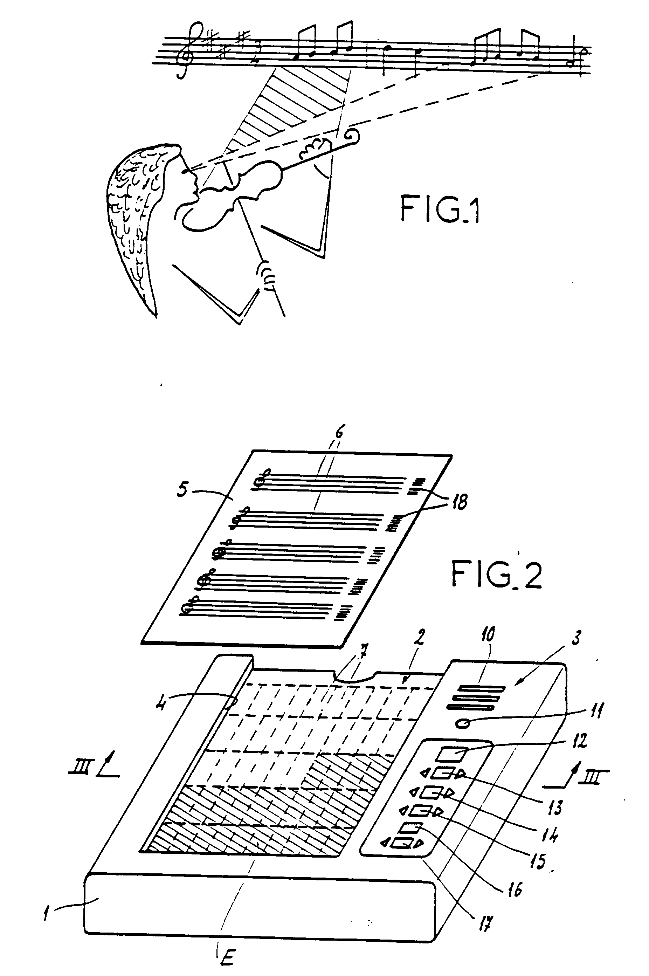

La présente invention concerne un appareil pédagogique pour le perfectionnement de la lecture, notamment de la lecture de partitions dans le cadre de l'enseignement musical, mais aussi de la lecture de textes par exemple pour l'apprentissage des langues étrangères. Plus particulièrement, cet appareil pédagogique vise à exercer et développer la faculté d'anticipation de lecture, notion qui est explicitée ci-après dans le cas du déchiffrage d'une partition de musique, en référence à la figure 1 du dessin schématique annexé.

Dans l'enseignement musical, s'il est courant d'apprendre à un élève les éléments spécifiques de la technique de son instrument : tenue, doigtés, justesse, qualité de son, etc..., il est par contre beaucoup moins habituel d'inculquer à l'élève une "bonne" attitude de lecture. On peut même constater de façon assez générale, chez les musiciens en cours de formation, une incapacité à résoudre de façon satisfaisante les problèmes liés à la lecture et au déchiffrage, et il existe là une situation non satisfaisante à laquelle il convient d'apporter un remède.

L'attitude de lecture est le rapport entre la musique lue et la musique jouée, c'est-à-dire le rapport qu'un musicien effectue entre la prise de connaissance mentale d'une musique écrite sur une partition et la réalisation sonore, à l'aide de l'instrument, de cette même musique ; éventuellement, dans le cas du chant qui est tout à fait analogue, il s'agit du rapport entre la lecture de la partition et la concrétisation vocale.

Pour que ce rapport soit satisfaisant, donc pour que l'attitude de lecture soit "bonne", il faut qu'il y ait un décalage par anticipation de la lecture sur la réalisation sonore instrumentale ou vocale. Cette notion d'anticipation de lecture est illustrée par la figure 1, où les traits pointillés indiquent ce qui doit être lu par le musicien, pendant qu'il joue le passage qui correspond à la zone hachurée. Ainsi, la lecture visuelle doit précéder temporellement, par exemple de N mesures ou temps, la réalisation sonore ; autrement dit, lorsque le musicien joue un certain passage, il doit déjà être en train de lire le passage suivant, et ceci à tout moment de l'exécution d'un morceau.

L'expérience montre que cette "bonne" attitude de lecture est la condition essentielle à la mise en place d'un véritable réflexe de déchiffrage. Certes, des enseignants conscients de l'importance de l'attitude de lecture ont déjà cherché à développer chez leurs élèves la faculté d'anticipation. Toutefois, les méthodes traditionnelles se sont révèlées insuffisantes : en effet, ces enseignants se sont heurtés à la difficulté objective d'induire et de contrôler chez les élèves, de façon satisfaisante, le mécanisme mental de l'anticipation.

En conséquence de la situation exposée ci-dessus, seule une faible proportion d'élèves adoptent, plutôt par chance et empiriquement, la "bonne" attitude de lecture. Les autres, qui constituent la grande majorité des élèves, conservent une "mauvaise" attitude de lecture, qui laisse le déchiffrage à un niveau médiocre et qui rend aventureuse l'exécution d'un morceau avec partition ou même de mémoire, ceci par manque d'habitude de l'anticipation mentale des passages à exécuter.

La présente invention vise à remédier à cette situation et à ses conséquences, en fournissant aux enseignants des moyens pour induire et contrôler de façon rationnelle chez leurs élèves la "bonne" attitude de lecture et en procurant par là même, aux élèves, les moyens d'acquérir cette attitude de lecture. Bien entendu, l'invention ici revendiquée se limite à ces moyens considérés sous leur aspect technique et matériel, les méthodes pédagogiques qui soutiennent cette invention, et les exercices pratiques qui l'accompagnent, étant exclus du champ de la brevetabilité.

Selon l'invention, les buts exposés précédemment sont atteints à l'aide d'un appareil pédagogique pour le perfectionnement de la lecture, qui comprend essentiellement une surface translucide prévue pour recevoir au moins une feuille mobile, également translucide, portant une partition ou un texte à lire, et des moyens d'éclairage disposés sous la surface translucide et agencés de manière à permettre un éclairage partiel de cette surface notamment par subdivision en lignes et rangées, ainsi que des moyens de commande et de contrôle prévus pour activer les moyens d'éclairage de manière à provoquer, en cours d'utilisation de l'appareil, une évolution dans le temps de la zone éclairée se faisant en correspondance avec une lecture de la partition ou du texte porté par la feuille mobile mise sous la surface translucide.

Ainsi, l'appareil pédagogique objet de l'invention permet des exercices de lecture avec une assistance active, selon le principe suivant :

Les exercices de lecture se présentent, chacun, sous la forme d'une feuille en matière translucide, imprimée par exemple avec une série de portées musicales, et prévue pour être placée sur la surface translucide de l'appareil, qui est en pratique un écran lumineux. Lorsque l'appareil fonctionne, la partition est éclairée partiellement et de façon évolutive de manière à attirer l'attention des yeux de l'élève sur un certain passage, tandis qu'il joue simultanément un passage lu précédemment mais n'étant plus éclairé, de sorte qu'un décalage de la lecture sur la réalisation sonore est imposé à l'élève.

Dans une forme de réalisation de l'invention, les moyens d'éclairage disposés sous la surface translucide sont des godets ou alvéoles, disposés en lignes et rangées et pourvus chacun d'une source lumineuse individuelle et contrôlable de façon séparée, tandis que les moyens de commande et de contrôle sont prévus pour provoquer l'éclairement ou l'extinction des sources lumineuses avec un effet d'ensemble de propagation des godets ou alvéoles éclairés ou non, en suivant les lignes et rangées. Plus particulièrement, les différentes lignes de godets ou d'alvéoles lumineux, lesquels constituent autant d'unités éclairantes indépendantes, sont prévues en correspondance avec les portées musicales imprimées sur les feuilles d'exercices, et la subdivision supplémentaire en rangées permet une progression en suivant chaque ligne de la gauche vers la droite. Dans ce cadre général, deux modes de fonctionnement principaux sont envisageables :

Selon une première possibilité, la partition est entièrement éclairée au début de l'exercice, et elle disparaît progressivement au cours de l'exercice, les godets ou alvéoles lumineux étant éteints successivement, suivant une progression correspondant aux mesures et/ou aux temps musicaux.

Selon une autre possibilité, la zone éclairée reste de longueur limitée à tout instant de l'exercice, et elle se déplace en suivant la partition, au cours de l'exercice. Chaque godet ou alvéole est donc, dans ce cas, successivement éclairé puis éteint.

Etant donné que chaque godet ou alvéole peut être éclairé séparément, et que l'appareil comporte une sorte de matrice formée par toutes les lignes et rangées de godets ou alvéoles, on peut encore envisager un mode de fonctionnement auxiliaire, dans lequel la combinaison des godets ou alvéoles simultanément éclairés forme un ou des caractères alphanumériques et permet ainsi, notamment, l'affichage de nombres formés par plusieurs chiffres et ayant une signification liée à l'utilisation de l'appareil. Ceci permet, par exemple, d'afficher la hauteur d'une note exprimée en "Hz", avec trois chiffres, en liaison avec un diapason intégré à l'appareil.

Pour assurer de façon optimale sa fonction de perfectionnement à la lecture, l'appareil pédagogique objet de l'invention comprend encore avantageusement :
- des moyens aptes à diffuser de façon sonore un morceau de musique ou un texte correspondant à une feuille d'exercice mise en place sur cet appareil, l'évolution de la zone éclairée se faisant avec une anticipation sur la diffusion sonore ;
- des moyens de réglage de l'avance de l'évolution de la zone éclairée par rapport à la diffusion sonore, donc de réglage de l'anticipation de lecture, permettant une adaptation de cette avance en fonction de la difficulté de l'exercice et du niveau de l'élève ;
- des moyens de réglage de la vitesse de l'évolution de la zone éclairée, correspondant dans l'application musicale de l'appareil à un réglage du "tempo" métronomique ;
- des moyens de diffusion sonore d'un battement métronomique, en liaison avec le réglage précédent ;
- des moyens pour la commande d'une interruption de l'évolution de la zone éclairée, à tout instant désiré, ces moyens étant utiles pour arrêter l'exercice en cours dès que l'élève ne parvient plus à "suivre" la partition ou le texte à lire ;
- des moyens pour la sélection de l'endroit de la reprise de l'évolution de la zone éclairée, après un arrêt commandé par les moyens précédents, pour faire repartir l'exercice à un endroit propice.

De toute façon, l'invention sera mieux comprise, et d'autres caractéristiques seront mises en évidence, à l'aide de la description qui suit, en référence au dessin schématique annexé représentant à titre d'exemple non limitatif une forme d'exécution de cet appareil pédagogique pour le perfectionnement de la lecture :
Figure 2 est une vue d'ensemble, en perspective, d'un appareil pédagogique conforme à l'invention, destiné à des exercices de lecture de partitions musicales ;
Figure 3 est une vue en coupe de l'appareil, suivant III-III de figure 2, montrant notamment les godets ou alvéoles lumineux ;
Figure 4 est un schéma de principe synoptique de cet appareil.

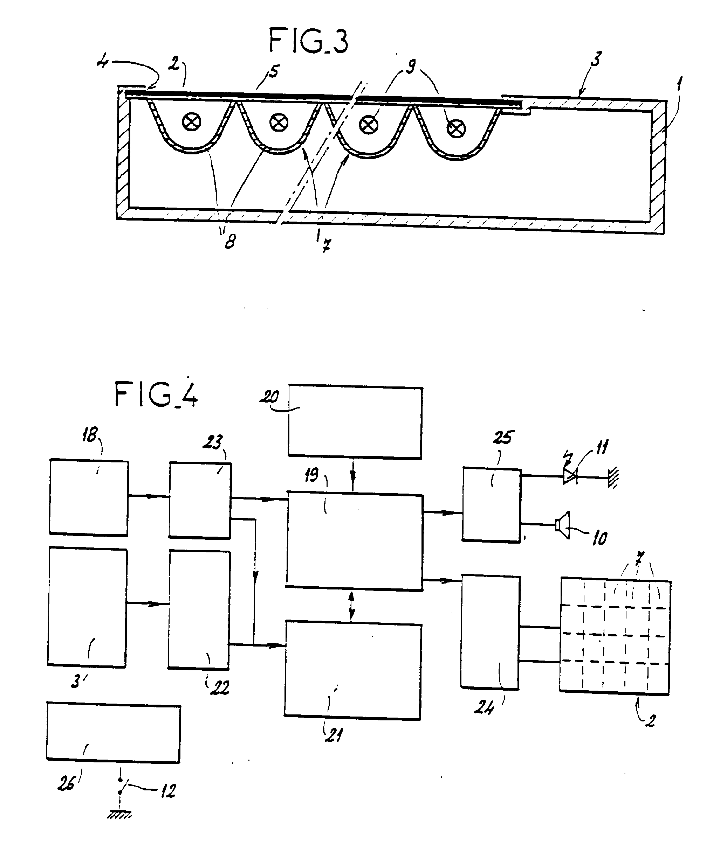

L'appareil représenté aux figures 2 et 3 comprend un boîtier 1 par exemple en matière plastique moulée, de forme générale rectangulaire et d'épaisseur relativement faible, sur la face avant duquel apparaissent d'une part un écran rectangulaire 2, et d'autre part un tableau de commande 3.

L'écran 2, situé ici sur la gauche de l'appareil, est formé par une surface translucide, telle que verre dépoli ou similaire, susceptible d'être éclairée depuis l'arrière de l'appareil. Cet écran 2 est délimité sur au moins trois côtés par un bord 4 utilement conformé en glissière et permettant de positionner sous la surface translucide une feuille mobile 5 portant une partition, la feuille 5 étant représentée éloignée de l'écran 2 sur la figure 2 pour la clarté du dessin.

La feuille 5, constituant le support d'un exercice, est une feuille translucide par exemple en matière plastique transparente semi-rigide. Sur cette feuille d'exercice 5 sont imprimées plusieurs portées musicales 6 superposées, servant elles-mêmes de support à des notes et autres symboles musicaux, non représentés dans le détail.

Sous l'écran 2, l'appareil comporte des godets lumineux 7 disposés en lignes et rangées, suivant une sorte de matrice. Les différentes lignes de godets 7 correspondent à la disposition des portées 6, lorsque la feuille d'exercice 5 est mise en place sur l'écran 2. Les rangées de godets 7 constituent une subdivision des lignes, chaque rangée possédant une largeur relativement faible, correspondant à une courte portion d'une portée 6. La disposition d'ensemble des godets 7 apparaît sur la figure 2, tandis que leur détail ressort de la figure 3, ces figures n'ayant évidemment qu'une valeur indicative en ce qui concerne le nombre des lignes et des rangées de godets 7.

En se référant à la figure 3, chaque godet 7 comprend un réflecteur 8 de forme sensiblement parabolique, au centre duquel est placée une ampoule électrique 9, dont l'allumage provoque par l'arrière l'éclairement de l'écran 2 sur l'étendue correspondant au godet 7 considéré. Les séparations entre godets 7 adjacents apparaissent sur la figure 2 pour les besoins de l'explication, mais il convient que dans la réalisation de l'appareil, lorsque deux godets adjacents sont éclairés, leur séparation soit invisible, autrement dit que l'écran 2 laisse voir une surface éclairée continue. L'alimentation de l'ampoule électrique 9 de chaque godet 7 est indépendante de celle des ampoules 9 des autres godets 7, de manière à permettre des combinaisons d'éclairement diverses et évolutives, correspondant à un éclairage généralement partiel (et éventuellement complet) de l'écran 2.

On comprend donc que, si une feuille d'exercice 5 est placée sous l'écran 2, l'appareil permet de faire ressortir, par un éclairage venant de l'arrière, une certaine partie des portées 6 donc de la partition imprimée sur la feuille 5. Partant de ce principe, le mode d'éclairage peut être notamment le suivant :

Au départ de l'exercice, toutes les portées 6 sont éclairées, l'ensemble des ampoules 9 des godets 7 étant allumé. Au cours de l'exercice, les ampoules 9 sont successivement éteintes, en suivant les lignes de godets 7 de haut en bas, et dans chaque ligne en suivant la succession des rangées de la gauche vers la droite, de telle sorte que la partition disparaît progressivement, à une vitesse qui correspond à l'exécution normale du morceau de musique inscrit sur cette partition. La partie hachurée sur la figure 2 indique, à titre d'exemple, la zone E de l'écran 2 qui reste éclairée à un certain stade intermédiaire d'avancement de l'exercice.

Le tableau de commande 3, situé sur la droite de l'appareil se compose de trois modules distincts, répartis de haut en bas.

Le premier module 10 est un module de sonorisation, comprenant essentiellement un haut-parleur dont la fonction est double : d'une part, il diffuse un battement métronomique, et d'autre part, il fait entendre la partition musicale correspondant à l'exercice en cours. Ce module de sonorisation peut encore comprendre un voyant lumineux 11, tel que diode électroluminescente, qui clignote au rythme du battement métronomique.

Sous le module de sonorisation 10-11 se trouve un module de réglage, qui comprend quatre touches principales, à savoir :
- une première touche 12 pour la commande de mise en marche et d'arrêt de l'appareil ;
- une deuxième touche 13 pour le réglage du diapason, ayant aussi une fonction de suppression de la diffusion musicale simultanée ;
- une troisième touche 14 pour le réglage du tempo métronomique, ayant en outre une fonction de suppression de la diffusion sonore du battement ;
- une quatrième touche 15 pour le réglage de l'anticipation de lecture.

Enfin, le troisième module est un module de jeu, à l'aide duquel on commande la diffusion de l'exercice pour le travail de lecture proprement dit. Ce troisième module comprend deux touches principales :
- une touche de départ 16 sert à lancer l'exercice,
- une touche combinée 17 d'arrêt et de recherche permet d'interrompre l'exercice à un instant quelconque, et de choisir l'endroit où l'on fait repartir l'exercice, ce qui peut être en avant ou en arrière du point d'arrêt.

Dans l'utilisation pratique de l'appareil, on installe en un premier temps cet appareil sur un pupitre musical habituel, au même titre qu'une partition ordinaire, ce qui est permis par les dimensions de l'appareil. Puis on met l'appareil en service par pression sur la touche de marche/arrêt 12, et on glisse la feuille d'exercice 5 choisie à son emplacement sur l'écran 2. Dès cet instant, l'écran 2 s'illumine entièrement, faisant apparaître l'exercice dans sa totalité.

Cette mise en place initiale étant effectuée, on procède aux réglages désirés, en agissant :
- sur la touche 13 pour le réglage du diapason, ce qui permet à l'utilisateur d'accorder son instrument sur un diapason étalonné, ou d'accorder l'appareil sur un instrument tel que piano (réglage indispensable en cas d'utilisation de l'audition parallèle que propose l'appareil) ;
- sur la touche 14 pour le réglage du tempo métronomique, l'utilisateur pouvant ainsi choisir son propre tempo qui correspond ici à la vitesse de défilement et d'exécution de l'exercice ;
- sur la touche 15 de réglage d'anticipation de lecture, pour sélectionner une avance plus ou moins importante de l'obscurcissement de la partition (par extinction des godets 7) par rapport à l'émission sonore de cette partition, l'avance choisie pouvant être de 1,2,3 ou 4 temps d'avance, etc...

Ces différents réglages préliminaires étant effectués, l'utilisateur peut passer à l'exercice proprement dit, en actionnant la touche de départ 16 et en portant son regard sur l'écran 2. Après une phase initiale, l'écran 2 fait disparaître la partition temps par temps, en fonction de l'avance choisie, tandis que l'appareil émet le battement métronomique par un double signal, d'une part sonore (haut-parleur du module de sonorisation 10) et d'autre part lumineux (voyant 11), et diffuse simultanément le morceau correspondant à la partition, permettant ainsi à l'utilisateur d'être parfaitement "calé" sur le processus de lecture anticipée.

En cours d'exercice, si nécessaire, l'utilisateur se sert de la touche 17 d'arrêt et de recherche. Pour reprendre l'exercice à l'endroit sélectionné, il lui suffit d'appuyer sur la touche de départ 16 ; le processus de lecture repart alors à l'endroit choisi.

Lorsque le travail de lecture assistée est terminé dans le cadre d'un exercice donné, la feuille d'exercice 5 est enlevée et elle peut être remplacée par une autre feuille d'exercice similaire. Comme le montre la figure 2, chaque feuille 5 peut comporter, sur l'un des bords, des indications codées 18, notamment sous la forme de code optique (code barres) ou de code magnétique, qui caractérisent l'exercie correspondant et qui peuvent être lues par l'appareil. Il est à noter que les indications codées 18 peuvent fournir, à elles seules, toutes les données nécessaires pour la diffusion sonore par l'appareil du morceau complet sur lequel se fonde l'exercice considéré.

La figure 4 donne enfin un schéma de principe synoptique de l'appareil, avec indication des fonctions internes assurées par des composants et circuits électroniques. Une unité centrale 19 de contrôle et de calcul est reliée à une base de temps 20, telle qu'horloge à quartz, et à une mémoire 21. Du côté des entrées, le tableau de commande 3 est relié à la mémoire 21 par l'intermédiaire d'un circuit d'adaptation 22. Un lecteur optique ou magnétique 23, adapté aux indications codées 18 portées par les feuilles d'exercices, transfère ces données vers l'unité centrale 19 de contrôle et de calcul, ainsi que vers la mémoire 21. Du côté des sorties, un circuit de commande 24 relié à l'unité centrale 19 assure le contrôle de l'éclairage de l'écran 2, par un système de multiplexage permettant la commande d'éclairage séparée de chaque godet 7 de cet écran 2, avec des séquences appropriées d'allumage et/ou d'extinction desdits godets 7. Un autre circuit de commande 25 assure le fonctionnement adapté du haut-parleur du module de sonorisation 10, et du voyant lumineux 11 associé tel que diode électroluminescente. Enfin, un module d'alimentation électrique 26 est associé à la touche de marche/arrêt 12.

Comme il va de soi, l'invention ne se limite pas à la seule forme d'exécution de cet appareil pédagogique pour le perfectionnement de la lecture qui a été décrite ci-dessus, à titre d'exemple ; elle en embrasse, au contraire, toutes les variantes de réalisation et d'application respectant le même principe. En particulier, l'on ne s'éloignerait pas du cadre de l'invention par des modifications secondaires concernant, par exemple, le nombre et la disposition des godets lumineux, ou par l'adjonction de dispositions remplissant des fonctions auxiliaires, ou encore en destinant l'appareil à un domaine autre que celui de l'enseignement musical, notamment pour l'apprentissage de langues étrangères comportant une difficulté de lecture, telles que les langues dont l'écriture utilise des idéogrammes.

## Revendications

1. Appareil pédagogique pour le perfectionnement de la lecture, notamment de la lecture de partitions dans le cadre de l'enseignement musical, mais aussi de la lecture de textes par exemple pour l'apprentissage des langues étrangères, l'appareil comprenant une surface translucide (2) prévue pour recevoir au moins une feuille mobile (5), également translucide, portant une partition ou un texte à lire (6), et des moyens d'éclairage (7,8,9) disposés sous la surface translucide (2) et agencés de manière à permettre un éclairage partiel de cette surface (2) notamment par subdivision en lignes et rangées, ainsi que des moyens de commande et de contrôle (3 ; 18 à 26) prévus pour activer les moyens d'éclairage (7,8,9) de manière à provoquer, en cours d'utilisation de l'appareil, une évolution dans le temps de la zone éclairée (E) se faisant en correspondance avec une lecture d'une partition ou d'un texte (6) porté par la feuille mobile (5) mise sous la surface translucide (2), et l'appareil comprenant encore des moyens (10) aptes à diffuser de façon sonore un morceau de musique ou un texte correspondant à une feuille d'exercice (5) mise en place sur cet appareil, caractérisée en ce que les moyens de commande et de contrôle, prévus pour activer les moyens d'éclairage (7,8,9), sont conçus de telle sorte que l'évolution de la zone éclairée (E) se fasse avec une anticipation sur la diffusion sonore.

2. Appareil pédagogique pour le perfectionnement de la lecture, selon la revendication 1, caractérisé en ce qu'il comprend des moyens de réglage (15) de l'avance de l'évolution de la zone éclairée (E) par rapport à la diffusion sonore correspondante.

3. Appareil pédagogique pour le perfectionnement de la lecture, selon la revendication 1 ou 2, caractérisé en ce que les moyens de commande et de contrôle, prévus pour activer les moyens d'éclairage constitués par des godets ou alvéoles (7) disposés en lignes et rangées et pourvus chacun d'une source lumineuse (9), sont tels qu'une partition imprimée sur la feuille d'exercice (5) placée sous la surface translucide (2) est entièrement éclairée au début d'un exercice, et disparaît progressivement au cours de l'exercice, les godets ou alvéoles lumineux (7) étant éteints successivement avec anticipation sur la diffusion sonore correspondante.

4. Appareil pédagogique pour le perfectionnement de la lecture, selon l'une quelconque des revendications 1 à 3, caractérisé en ce que les moyens de commande et de contrôle, prévus pour activer les moyens d'éclairage constitués par des godets ou alvéoles (7) disposés en lignes et rangées et pourvus chacun d'une source lumineuse (9), sont encore prévus pour former, par la combinaison des godets ou alvéoles (7) simultanément éclairés, un ou des caractères alphanumériques, permettant ainsi notamment l'affichage de nombres formés par plusieurs chiffres et ayant une signification liée à l'utilisation de l'appareil.

5. Appareil pédagogique pour le perfectionnement de la lecture, selon l'une quelconque des revendications 1 à 4, caractérisé en ce qu'il comprend des moyens (17) pour la commande d'une interruption de l'évolution de la zone éclairée (E), à tout instant désiré.

6. Appareil pédagogique pour le perfectionnement de la lecture, selon la revendication 5, caractérisé en ce qu'il comprend des moyens (16,17) pour la sélection de l'endroit de la reprise de l'évolution de la zone éclairée, après un arrêt commandé par les moyens précédents.

7. Appareil pédagogique pour le perfectionnement de la lecture, selon l'une quelconque des revendications 1 à 6, caractérisé en ce qu'il comprend encore un lecteur optique ou magnétique (23), prévu pour lire des indications codées (18) portées par les feuilles d'exercices (5), notamment des données nécessaires pour la diffusion sonore par l'appareil.

## Patentansprüche

1. Ein pädagogischer Apparat zur Fortbildung im Lesen sowohl von Partituren im Rahmen des Musikunterrichts, also auch von Texten, z. B. zum Erlernen von Fremdsprachen. Der Apparat umfasst eine durchsichtige Oberfläche (2) die vorgesehen ist für mindestens eine lose, ebenfalls durchsichtige Seite (5) einer Partitur oder eines Textes (6), und, unter der durchsichtigen Seite, Beleuchtungsmittel (7,8,9) die so angebracht sind, dass sie eine teilweise Beleuchtung dieser Seite (2) erlauben, besonders durch Unterteilungen in Linien und Reihen, sowie Betriebs- und Kontrollschalter (3, 18-26), die es ermöglichen die Beleuchtungsmittel (7,8,9) so zu bedienen, dass bei Benützen des Apparates ein zeitliches Voranlaufen der erleuchteten Zone (E) stattfindet, welches dem Lesen einer Partitur entspricht, oder dem eines Textes (6) auf der losen Seite (5) unter der durchsichtigen Oberfläche (2),
Der Apparat enthält ausserdem noch Mittel (10) zur Tonwiedergabe eines Musikstückes, oder eines Textes gemäss des, in dem Apparat eingelegten Übungsblattes (5). Diese zeichnen sich darin aus, dass die Betriebs- und Kontrollschalter, die vorgesehen sind um die Beleuchtung (7,8,9) zu bedienen, so gestalltet sind, dass der Vorlauf der beleuchteten Zone (E) im Vorweg zur Tonwiedergabe geschieht.

2. Ein pädagogischer Apparat zur Fortbildung im Lesen, gemäss der Anforderungen Nr 1, sich darin auszeichnend, dass er Regler (15) enthält, die dafür sorgen, dass der Vorlauf der beleuchteten Zone (E) schneller als die entsprechende Tonwiedergabe geschieht.

3. Ein pädagogischer Apparat zur Fortbildung im Lesen gemäss der Anforderungen 1 oder 2, der sich darin auszeichnet, dass die Betriebs- und Kontrollmittel der Beleuchtungsmittel, bestehend aus Näpfchen und Zellen-Aushöhlungen (7), in Linien und Reihen angeordnet und jeweils mit einer Lichtquelle (9) versehen, dass diese Betriebsmittel so funktionieren, dass eine, unter der durchsichtigen Oberfläche liegende, auf dem Übungsblatt (5) abgedruckte Partition am Anfang einer Übung voll und ganz beleuchtet ist, und dann im Laufe der Übung nach und nach verschwindet, da die leuchtenden Näpfchen und Zellen mit dem Vorlaufen der entsprechenden Tonwiedergabe ausgeschaltet werden.

4. Ein pädagogischer Apparat zur Fortbildung im Lesen, gemäss einer der Anforderungen 1-3, sich dadurch auszeichnend, dass die Betriebs- und Kontrollmittel zur Aktivierung der Beleuchtungsmittel aus Näpfchen oder Zellen in Linien oder Reihen angeordnet und jeweils mit einer Lichtquelle (9) versehen, dass diese auch noch vorsehen (durch gleichzeitig erleuchtete Kombinationen der Näpfchen (7) oder Zellen) einen oder mehrer alpha-numerische Zeichen zu formen, die dann besonders das Anzeigen von Zahlen erlauben, welche durch mehrer Ziffern geformt sind und eine Bedeutung haben, die mit dem Gebrauch des Apparate zu tun hat.

5. Ein pädagogischer Apparat zur Fortbildung im Lesen gemäss einer der Anforderunge 1-4, sich auszeichnend durch Betriebsmittel (17) zur Unterbrechung des Ablaufes der erleuchteten Zone (E) zu jedem gewünschten Augenblick.

6. Ein pädagogischer Apparat sur Fortbildung im Lesen gemäss der Anforderung 5, sich auszeichnend durch Wahlmöglichkeiten (16,17) für die Stelle der Wiederaufnahme der erleuchteten Zone, nach dem durch die vorherigen Mittel ein Halt erzielt wurde.

7. Ein pädagogischer Apparat zur Fortbildung im Lesen gemäss einer der Anforderungen 1-6, sich auszeichnend dadurch, dass er ausserdem noch einen optischen oder magnetischen (23) Sensor hat, um verschlüsselte Anweisungen (18) auf den Übungsblättern (5) zu lesen, ganz besonders die zur sonoren Wiedergabe des Apparates notwendigen Angaben.

## Claims

1. Pedagogic system for reading improvement especially for musical scores as part of music teaching, but equally for literary texts in order to learn foreign languages, the system including a translucent surface (2) designed to receive at least one loose-leaf (5), equally translucent, support of a musical score or a literary text (6) and means for lighting (7, 8, 9) disposed under the translucent surface (2) and arranged in order to permet a partial lighting ot this surface (2) especially by subdivision in lines and rows, as well as order and control means (3 ; 18 to 26) designed to activate the lighting means (7, 8, 9) in order to induce, during the utilisation of the system, an evolution in the time of the lighted zone (E) and entering in action connected with a musical score or a literary text reading (6) supported by the loose-leaf (5) disposed under the translucent surface (2) and the system more including suitable means (10) able to broadcast in an acoustic way a musical piece or a literary text, corresponding to an exercise leaf (5), placed on this system, characterized by the fact that the command and control means, arranged to activate the lighting means (7, 8, 9) are conceived so that the evolution of the lighted zone (E) is brought to effect with an anticipation towards the acoustic broadcasting.

2. Pedagogic system for reading improvement, according to the assertion 1, characterized in the fact that it contains means of adjustement (15) of the advance of the evolution of the lighted zone (E) with regard to the corespondant acoustic broadcasting.

3. Pedagogic system for reading improvement according to the assertion 1 or 2, characterized in the fact that the command and control means, organized to activate the lighting means which are constituted by cavities or alveoles (7) disposed in lines and rows and each one provided with a light source (9), are organised so that a musical score printed on the exercise leaf (5) placed under the translucent surface (2) is entirely lighted at the beginning of an exercise an disappears progressively during the exercise, the light cavities or alveoles being switched off successively by anticipation towards the corresponding acoustic broadcasting.

4. Pedagogic system for reading improvement, according to any of the assertions 1 to 3, characterized in the fact that the means of command and control, organised in order to activate the lighting means constituted by the cavities and alveoles (7) disposed in lines and rows and each one provided with a light source (9) are again organised to constitute by the grouping of the cavities or alveoles (7) lighted simultaneously, one or several alphanumerical characters, permitting, that way, the visual indication of numbers composed by several numerals and having a signification in rapport with the use of the system.

5. Pedagogic system for reading improvement, according to any assertion from 1 to 4, characterized by the fact that it includes means (17) for the command of a break of the evolution of the lighted zone (E) at any moment.

6. Pedagogic system for reading improvement, according to the assertion 5, characterized by the fact that it includes means (16, 17) for selection of the place of the recovery of the lighted zone evolution, after a stop ordered by the previous means.

7. Pedagogic system for reading improvement according to any of the assertions from 1 to 6, characterized by the fact that it contains, more, an optic or magnetic reader (23), organised to read the coded indications (18) showed by the exercise leaves (5), particularly the necessary indications for the acoustic broadcasting of the system.
